# EUROPÄISCHE PATENTSCHRIFT

(11) **EP 3 851 472 B1**
(45) Veröffentlichungstag und Bekanntmachung des Hinweises auf die Patenterteilung: **07.06.2023**
(21) Anmeldenummer: 21161413.6
(22) Anmeldetag: 23.04.2019
(51) Int. Cl.: C08G 18/79, C08G 18/80, C08G 18/08, C08G 18/28, C08G 18/38, C09D 175/08

(54) **IONISCH HYDROPHILIERTE POLYISOCYANATE, WASSERGEHALT**
IONICALLY HYDROPHILIZED POLYISOCYANATES, WATER CONTENT
POLYISOCYANATES HYDROPHILISÉS IONIQUES, TENEUR EN EAU

(30) Priorität: 25.04.2018 EP 18169338
(43) Veröffentlichungstag der Anmeldung: 21.07.2021
(62) Teilanmeldung aus: 19718390.8
(73) Patentinhaber: Covestro Intellectual Property GmbH & Co. KG, 51373 Leverkusen (DE)
(72) Erfinder: LAAS, Hans-Josef, 51519 Odenthal (DE)
(74) Vertreter: Levpat

(56) Entgegenhaltungen:
- DE-A1-102005 057 682
- US-A1- 2012 101 210

## Beschreibung

Die Erfindung betrifft ein Verfahren zur Herstellung Sulfonatgruppen enthaltender Polyisocyanate, die nach diesem Verfahren erhältlichen oder erhaltenen Sulfonatgruppen enthaltenden Polyisocyanate und die Verwendung dieser zur Herstellung von Polyurethankunststoffen. Außerdem betrifft die Erfindung Beschichtungsmittel enthaltend die Sulfonatgruppen enthaltenden Polyisocyanate sowie die mit diesen Beschichtungsmitteln beschichteten Substrate.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan(2K-PUR)-Lacke ermöglichen.

Eine sehr einfache Methode zur Herstellung wasserdispergierbarer Polyisocyanate ist beispielsweise die anteilige Umsetzung hydrophober Polyisocyanate mit hydrophilen Polyetheralkoholen (siehe z. B. EP-A 0 959 087, Seite 2, Zeilen 25 - 46). Polyether-modifizierte Polyisocyanate weisen jedoch den prinzipiellen Nachteil auf, dass der für eine ausreichende Dispergierbarkeit bei einem Einsatz als Vernetzer in wässrigen 2K-PUR-Lacken erforderliche hohe Polyethergehalt den erhaltenen Beschichtungen eine permanente Hydrophilie verleiht.

Zur Umgehung dieses Nachteils wurde auch bereits versucht, durch Einbau ionischer Gruppen, insbesondere Sulfonatgruppen, hydrophil modifizierte, selbstdispergierbare Polyisocyanate herzustellen.

WO 2009/010469 beschreibt die Verwendung von aromatischen Sulfonsäuren, die genau eine primäre oder sekundäre Aminogruppe tragen und ein spezielles Substitutionsmuster aufweisen, in Kombination mit monofunktionellen Polyetheralkoholen zur Hydrophilierung von Di- oder Polyisocyanaten.

Nach der Lehre der WO 2001/88006 lassen sich durch Umsetzung beliebiger Polyisocyanate mit 2-(Cyclohexylamino)-ethansulfonsäure (CHES) oder 3-(Cyclohexylamino)-propansulfonsäure (CAPS) hydrophilierte Polyisocyanate erhalten, die als Vernetzer in wäßrigen Lacksystemen zu Beschichtungen hoher Härte sowie ausgezeichneter Lösemittel- und Chemikalienbeständigkeit führen.

EP 3 045 485 A1 beschreibt die Verwendung weiterer am Stickstoff mit Cycloaliphaten substituierter Aminopropan-, Aminobutan- und/oder Aminoisobutansulfonsäuren als Hydrophilierungsmittel für Polyisocyanate.

Die in diesen Veröffentlichungen genannten Aminosulfonsäuren liegen im Allgemeinen als zwitterionische Verbindungen vor, die hohe Schmelzpunkte besitzen und in Polyisocyanaten und auch organischen Lösungsmitteln unlöslich oder zumindest sehr schwer löslich sind. Ihre vollständige Umsetzung mit Polyisocyanaten erfordert daher in der Regel selbst bei hohen Temperaturen sehr lange Reaktionszeiten.

Unter diesen Bedingungen - lange Reaktionszeit und/oder hohe Temperatur - reagieren Sulfonsäuregruppen in Gegenwart von Wasser entziehenden Verbindungen, wie sie Isocyanate darstellen, jedoch vermehrt auch untereinander zu Sulfonsäureanhydriden oder mit Isocyanatgruppen zu gemischten Anhydriden aus Sulfonsäuren und Carbaminsäuren, sogenannten Carbamoylsulfonaten, ab. Diese Nebenreaktionen reduzieren bei den vorstehend beschriebenen Verfahren zur Herstellung Sulfonatgruppen enthaltender Polyisocyanatvernetzer die Anzahl der Hydrophilie verleihenden Säuregruppen und verringern damit die Emulgierfähigkeit der Reaktionsprodukte.

Für die Formulierung wässriger Zweikomponenten-Polyurethan-Lacke höchster Qualität werden vom Markt aber gerade Polyisocyanatvernetzer gefordert, die eine hohe Hydrophilie aufweisen und sich leicht in die wässrige Phase einarbeiten lassen. Ziel eines effektiven Herstellverfahrens muss es daher sein, schonendere Reaktionsbedingungen für die Umsetzung von Aminosulfonsäuren mit Polyisocyanaten zu finden, um die oben beschriebenen Nebenreaktionen so weit wie möglich zu unterdrücken.

Aufgabe der vorliegenden Erfindung war es, ein neues Verfahren zur Herstellung Sulfonatgruppen enthaltender Polyisocyanate zur Verfügung zu stellen, das bei gegebener Temperatur kürzere Reaktionszeiten als die bisher bekannten Verfahren benötigt und dadurch Produkte liefert, die sich gegenüber nach den Verfahren des Standes der Technik hergestellten Sulfonatgruppen enthaltenden Polyisocyanaten durch eine deutlich verbesserte Dispergierbarkeit auszeichnen.

Diese Aufgabe konnte jetzt mit den nachfolgend näher beschriebenen Sulfonatgruppen enthaltenden Polyisocyanaten bzw. dem Verfahren zu ihrer Herstellung gelöst werden. Die vorliegende Erfindung beruht auf der überraschenden Beobachtung, dass die Umsetzung von Polyisocyanaten mit Aminosulfonsäuren und tertiären Neutralisationsaminen zu Sulfonatgruppen enthaltenden Polyisocyanaten deutlich schneller abläuft, wenn die eingesetzten Aminosulfonsäuren einen definierten Mindestgehalt an Wasser enthalten. Dies war überraschend, da in der Polyurethanchemie zur Vermeidung von Trübungen durch Harnstoffbildung aufgrund der Isocyanat/Wasser-Reaktion im Allgemeinen möglichst wasserfreie Rohstoffe eingesetzt werden. Für Polyurethanlackrohstoffe, deren Wassergehalt auf max. 500 ppm spezifiziert ist, haben sich im Markt beispielsweise Bezeichnungen wie "urethane grade" oder "PU-Qualität" etabliert, wobei in der Praxis üblicherweise sogar Wassergehalte von deutlich unterhalb von 500 ppm angestrebt und erreicht werden. Trotz der Verwendung wasserhaltiger Aminosulfonsäuren sind die nach dem erfindungsgemäßen Verfahren erhältlichen hydrophilen Polyisocyanate aber völlig klar und frei von Polyharnstoffausfällungen und zeigen überraschenderweise eine merklich verbesserte Emulgierbarkeit in wässrigen Systemen.

Gegenstand der vorliegenden Erfindung ist ein Verfahren zur Herstellung Sulfonatgruppen enthaltender Polyisocyanate, umfassend eine Umsetzung von
A) mindestens einer Polyisocyanatkomponente mit
B) mindestens einer Aminosulfonsäure, die mindestens eine Aminogruppe und mindestens eine Sulfonsäuregruppe aufweist, und gegebenenfalls
C) mindestens einer nichtionisch hydrophilen oder hydrophoben organischen Verbindung, die mindestens eine gegenüber Isocyanaten reaktive Gruppe aufweist, in Gegenwart
D) mindestens eines tertiären Amins und gegebenenfalls in Gegenwart
E) weiterer Hilfs- und Zusatzstoffe
dadurch gekennzeichnet,
dass die Aminosulfonsäure B) einen Wassergehalt von 0,05 bis 1,5 Gew.-% aufweist.

Gegenstand der Erfindung sind auch die nach diesem Verfahren erhältlichen oder erhaltenen Sulfonatgruppen enthaltenden Polyisocyanate sowie ihre Verwendung als Ausgangskomponenten bei der Herstellung von Polyurethankunststoffen, insbesondere als Vernetzer für wasserlösliche oder -dispergierbare Lackbindemittel oder Lackbindemittelkomponenten mit gegenüber Isocyanatgruppen reaktionsfähigen Gruppen bei der Herstellung von Überzügen unter Verwendung von wässrigen Beschichtungsmitteln auf Basis derartiger Bindemittel oder Bindemittelkomponenten.

Vorliegend wird der Wassergehalt der Aminosulfonsäure B) durch volumetrische Titration nach Karl Fischer nach DIN 53715 (erstellt in Anlehnung an DIN 51777 Teil 1 (Ausgabe 1973)) bestimmt. Der Messbereich dieser Methode liegt bei 0,01 bis 99 Gew.%. Der in Gew.-% angegebene Wassergehalt der Aminosulfonsäure B) ist bezogen auf die Gesamtmenge an eingesetzter Aminosulfonsäure B).

Bevorzugt bedeuten erfindungsgemäß die Ausdrücke "umfassend" oder "enthaltend", "im Wesentlichen bestehend aus" und besonders bevorzugt "bestehend aus".

Ausgangsverbindungen A) für das erfindungsgemäße Verfahren sind beliebige Diisocyanate und/oder Polyisocyanate mit aliphatisch, cycloaliphatisch, araliphatisch und/oder aromatisch gebundenen Isocyanatgruppen.

Geeignete Diisocyanate A) sind beliebige, auf verschiedene Weise, beispielsweise durch Phosgenierung in der Flüssig- oder Gasphase oder auf phosgenfreien Weg, wie z. B. durch thermische Urethanspaltung, zugängliche Diisocyanate. Bevorzugte Diisocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diiso-cyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Geeignete Polyisocyanate A) sind beliebige, durch Modifizierung einfacher aliphatischer, cycloaliphatischer, araliphatischer und/oder aromatischer Diisocyanate, beispielsweise solcher der vorstehend genannten Art, hergestellte Polyisocyanate mit Uretdion-, Isocyanurat-, Allophanat-, Biuret- , Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind oder um beliebige Gemische solcher Polyisocyanate. Bei der Herstellung dieser Polyisocyanate schließt sich an die eigentliche Modifizierungsreaktion in der Regel ein weiterer Verfahrenschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen beim erfindungsgemäßen Verfahren als Ausgangskomponente A) Polyisocyanate der genannten Art zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.- % aufweisen. Die Rest-Monomeren Gehalte werden nach DIN EN ISO 10283:2007-11 gaschromatographisch mit internem Standard bestimmt.

Besonders bevorzugte Polyisocyanate A) für das erfindungsgemäße Verfahren sind solche der genannten Art mit ausschließlich aliphatisch und/oder cycloaliphatisch gebundenen Isocyanatgruppen.

Ganz besonders bevorzugte Polyisocyanate A) sind solche auf Basis von PDI, HDI, IPDI und/oder 4,4'-Diisocyanatodicyclohexylmethan.

Die vorstehend als geeignet, bevorzugt, besonders bevorzugt und ganz besonders bevorzugt genannten Polyisocyanate A) enthalten vorzugsweise Isocyanuratstrukturen und weisen eine mittlere NCO-Funktionalität von 2,3 bis 5,0, vorzugsweise von 2,5 bis 4,5, sowie einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-% auf.

Ausgangsverbindungen B) für das erfindungsgemäße Verfahren sind beliebige organische Verbindungen, die mindestens eine Aminogruppe sowie mindestens eine Sulfonsäuregruppe tragen und einen Wassergehalt von 0,05 bis 1,5 Gew.-% aufweisen, sowie beliebige Gemische solcher Verbindungen.

Als Ausgangskomponente B) geeignete aminofunktionelle Verbindungen sind beispielsweise substituierte aromatische Sulfonsäuren, die bis zu drei Sulfonsäuregruppen tragen können und bis zu drei, bevorzugt bis zu zwei, besonders bevorzugt genau eine primäre oder sekundäre, ganz besonders bevorzugt genau eine primäre Aminogruppe aufweisen, wobei die Positionen am aromatischen Ring in ortho-Stellung zur Aminogruppe unsubstituiert sind.

Bevorzugt handelt es hierbei um substituierte aromatische Sulfonsäuren der allgemeinen Formel (I) 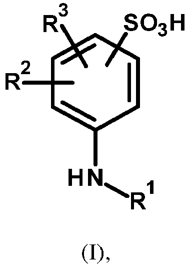 in welcher R', R² und R³ unabhängig voneinander für gleiche oder verschiedene Reste stehen und Wasserstoff oder gesättigte oder ungesättigte, lineare oder verzweigte, aliphatische, cycloaliphatische, araliphatische oder aromatische organische Reste bedeuten, die zusätzlich Heteroatome in der Kette aufweisen können, wobei R² und R³ auch in Kombination untereinander zusammen einen Ring, bevorzugt einen annellierten aromatischen Ring bilden können, mit der Maßgabe, daß mindestens einer der Reste R² und R³ ungleich Wasserstoff ist.

Aliphatische oder araliphatische Reste R', R² und R³ sind in Formel (I) vorzugsweise solche mit 1 bis 18 Kohlenstoffatomen, wie z. B. ein Methyl-, Ethyl-, Propyl-, Isopropyl-, n-Butyl-, sec-Butyl-, tert.-Butyl-, Pentyl-, Hexyl-, Heptyl-, Octyl-, 2-Etylhexyl-, 2,4,4-Trimethylpentyl-, Decyl-, Dodecyl- , Tetradecyl-, Hetadecyl-, Octadecyl-, 1,1-Dimethylpropyl-, 1,1-Dimethylbutyl-, 1,1,3,3-Tetramethylbutyl-, Benzyl-, 1-Phenylethyl-, 2-Phenylethyl-, α,α-Dimethylbenzyl-, Benzhydryl-, p-Tolylmethyl-, 1-(p-Butylphenyl)-ethyl-, p-Chlorbenzyl-, 2,4-Dichlorbenzyl-, p-Methoxybenzyl-, mEthoxybenzyl-, 2-Cyanoethyl-, 2-Cyanopropyl-, 2-Methoxycarbonethyl-, 2-Ethoxycarbonylethyl-, 2-Butoxycarbonylpropyl-, 1,2-Di(methoxycarbonyl)ethyl-, 2-Methoxyethyl-, 2-Ethoxyethyl-, 2-Butoxyethyl-, Diethoxymethyl-, Diethoxyethyl-, 1,3-Dioxolan-2-yl-, 1,3-Dioxan-2-yl-, 2-Methyl-1,3-dioxolan-2-yl-, 4-Methyl-1,3-dioxolan-2-yl-, 2-lsopropoxyethyl-, 2-Butoxypropyl-, 2-0ctyloxyethyl-, Chlormethyl-, 2-Chlorethyl-, Trichlormethyl-, Trifluormethyl-, 1,1-Dimethyl-2-chlorethyl-, 2-Methoxyisopropyl-, Butylthiomethyl-, 2-Dodecylthioethyl-, 2-Phenylthioethyl-, 2,2,2-Trifluorethyl-, 2-Phenoxyethyl-, 2-Phenoxypropyl-, 3-Phenoxypropyl-, 4-Phenoxybutyl-, 6-Phenoxyhexyl-, 2-Methoxyethyl-, 2-Methoxypropyl-, 3-Methoxypropyl-, 4-Methoxybutyl-, 6-Methoxyhexyl-, 2-Ethoxypropyl-, 3-Ethoxypropyl-, 4-Ethoxybutyl- oder 6-Ethoxyhexylrest.

Cycloaliphatische Reste R¹, R² und R³ sind in Formel (I) vorzugsweise solche mit 5 bis 12 Kohlenstoffatomen, wie z. B. ein Cyclopentyl-, Cyclohexyl-, Cyclooctyl-, Cyclododecyl-, Methylcyclopentyl-, Dimethylcyclopentyl-, Methylcyclohexyl-, Dimethylcyclohexyl-, Diethylcyclohexyl-, Butylcyclohexyl-, Methoxycyclohexyl-, Dimethoxycyclohexyl-, Diethoxycyclohexyl-, Butylthiocyclohexyl-, Chlorcyclohexyl-, Dichlorcyclohexyl-, Dichlorcyclopentylrest sowie gesättigte oder ungesättigte bicyclische Systeme wie z. B. ein Norbornyl- oder ein Norbornenylrest.

Aromatische Reste R', R² und R³ sind in Formel (I) vorzugsweise solche mit 6 bis 12 Kohlenstoffatomen, wie z. B. ein Phenyl-, Tolyl-, Xylyl-, o-Naphthyl-, β-Naphthyl-, 4-Diphenylyl-, Chlorphenyl-, Dichlorphenyl-, Trichlorphenyl-, Difluorphenyl-, Methylphenyl-, Dimethylphenyl-, Trimethylphenyl-, Ethylphenyl-, Diethylphenyl-, Isopropylphenyl-, tert.-Butylphenyl-, Dodecylphenyl-, Methoxyphenyl-, Dimethoxyphenyl-, Ethoxyphenyl-, Hexyloxyphenyl-, Methylnaphthyl-, Isopropylnaphthyl-, Chlornaphthyl-, Ethoxynaphthyl-, 2,6-Dimethylphenyl-, 2,4,6-Trimethylphenyl-, 2,6-Dimethoxyphenyl-, 2,6-Dichlorphenyl-, 4-Bromphenyl-, 2- oder 4-Nitrophenyl-, 2,4- oder 2,6-Dinitrophenyl-, 4-Dimethylaminophenyl-, 4-Acetylphenyl-, Methoxyethylphenyl- oder Ethoxymethylphenylrest.

Bilden die Reste R² und R³ in Formel (I) zusammen einen Ring, so stehen R² und R³ vorzugsweise für eine Butyl-1,4-ylenkette oder besonders bevorzugt für eine 1,3-Butadien-1,4-ylenkette, was bedeutet, dass die aromatischen Sulfonsäuren in diesem Fall vorzugsweise eine Tetrahydronaphthalin- oder besonders bevorzugt eine Naphthalinstruktur aufweisen.

Besonders bevorzugt handelt es sich beim Rest R¹ um Wasserstoff, einen Methyl-, Ethyl-, n-Propyl- , Isopropyl-, tert-Butyl-, Cyclopentyl- oder Cyclohexylrest, ganz besonders bevorzugt um Wasserstoff.

Besonders bevorzugt handelt es sich bei den Resten R² und R³ unabhängig voneinander um Wasserstoff, einen Methyl-, Ethyl-, Isopropyl-, tert-Butyl-, Hexyl-, Octyl-, Nonyl-, Decyl-, Dodecyl- , Phenyl- oder Naphthylrest, ganz besonders bevorzugt um Wasserstoff und/oder eine Methylgruppe. Dabei steht bevorzugt einer der Reste R² und R³ für Wasserstoff während der andere ungleich Wasserstoff ist.

Die Sulfonsäuregruppe in Formel (I) steht am aromatischen Ring ebenso wie die Substituenten R² und R³ in para- oder meta-Stellung bezogen auf die primäre bzw. sekundäre Aminogruppe, die Sulfonsäuregruppe steht dabei bevorzugt in meta-Stellung.

Geeignete aromatische Aminosulfonsäuren der allgemeinen Formel (I) sind beispielsweise 4-Aminotoluol-2-sulfonsäure, 5-Aminotoluol-2-sulfonsäure oder 2-Aminonaphthalin-4-sulfonsäure, besonders bevorzugt um 4-Aminotoluol-2-sulfonsäure.

Weitere Ausgangsverbindungen B) für das erfindungsgemäße Verfahren sind auch aminofunktionelle Sulfonsäuren der allgemeinen Formel (II) 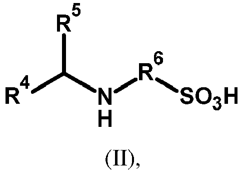 in welcher R⁴ und R⁵ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁴ und R⁵ auch in Kombination untereinander und gegebenenfalls mit einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁶ für einen linearen oder verzweigten aliphatischen Rest mit 2 bis 6 Kohlenstoffatomen steht.

Vorzugsweise stehen in der allgemeinen Formel (II) R⁴ und R⁵ unabhängig voneinander für gesättigte, lineare oder verzweigte, aliphatische oder cycloaliphatische organische Reste mit 1 bis 8 Kohlenstoffatomen, die auch in Kombination untereinander cycloaliphatische Ringe bilden können, und R⁶ für einen linearen oder verzweigten aliphatischen Rest mit 2 bis 4 Kohlenstoffatomen.

Geeignete Aminosulfonsäuren der allgemeinen Formel (II) sind beispielsweise 2-Aminoethansulfonsäure, 3-Aminopropan-1-sulfonsäure, 4-Aminobutan-1-sulfonsäure, 3-Aminobutan-1-sulfonsäure, 3-Amino-2-methylpropan-1-sulfonsäure, 4-Aminobutan-2-sulfonsäure, 2-Methylaminoethan-1-sulfonsäure, 2-Ethylaminoethan-1-sulfonsäure, 2-Propylaminoethan-1-sulfonsäure, 2-Isopropylaminoethan-1 -sulfonsäure, 2-n-Butylaminoethan-1 -sulfonsäure, 2-(tert-Butyl)aminoethan-1 -sulfonsäure, 2-Pentylaminoethan-1-sulfonsäure, 2-Hexylaminoethan-1-sulfonsäure, 2-Octylaminoethan-1-sulfonsäure, 2-Anilinoethan-1-sulfonsäure, 2-Cyclopropylaminoethan-1-sulfonsäure, 2-Cyclo-butylaminoethan-1-sulfonsäure, 2-Cyclopentylaminoethan-1-sulfonsäure, 2-Cyclohexylaminoethan-1-sulfonsäure, die isomeren 2-(Methylcyclohexyl)aminoethan-1-sulfonsäuren, 2-(2,3-Dimethylcyclohexyl)aminoethan-1-sulfonsäure, 2-(3,3,5-Trimethylcyclohexylaminoethan-1-sulfonsäure, 2-(4-tert-Butylcyclohexyl)aminoethan-1-sulfonsäure, 2-Cycloheptylaminoethan-1-sulfonsäure, 2-Cyclooctylaminoethan-1-sulfonsäure, 2-(2-Norbornyl)aminoethan-1-sulfonsäure, 2-(1-Adamantyl)aminoethan-1-sulfonsäure, 2-(3,5-Dimethyl-1-adamantyl)aminoethan-1-sulfonsäure, 3-Methylaminopropan-1-sulfonsäure, 3-Ethylaminopropan-1-sulfonsäure, 3-Propylaminopropan-1-sulfonsäure, 3-Isopropylaminopropan-1-sulfonsäure, 3-n-Butylaminopropan-1-sulfonsäure, 3-(tert-Butyl)aminopropan-1-sulfonsäure, 3-Pentylaminopropan-1-sulfonsäure, 3-Hexylaminopropan-1-sulfonsäure, 3-Octylaminopropan-1-sulfonsäure, 3-Anilinopropan-1-sulfonsäure, 3-Cyclopropylaminopropan-1-sulfonsäure, 3-Cyclo-butylaminopropan-1-sulfonsäure, 3-Cyclopentylaminopropan-1-sulfonsäure, 3-Cyclohexylaminopropan-1-sulfonsäure, die isomeren 3-(Methylcyclohexyl)aminopropan-1-sulfonsäuren, 3-(2,3-Dimethylcyclohexyl)aminopropan-1-sulfonsäure, 3-(3,3,5-Trimethylcyclohexylaminopropan-1-sulfonsäure, 3-(4-tert-Butylcyclohexyl)aminopropan-1-sulfonsäure, 3-Cycloheptylaminopropan-1-sulfonsäure, 3-Cyclooctylaminopropan-1-sulfonsäure, 3-(2-Norbornyl)aminopropan-1-sulfonsäure, 3-(1-Adamantyl)aminopropan-1-sulfonsäure, 3-(3,5-Dimethyl-1-adamantyl)aminopropan-1-sulfonsäure, 3-Methylaminobutan-1-sulfonsäure, 3-Ethylaminobutan-1-sulfonsäure, 3-Propylaminobutan-1-sulfonsäure, 3-Isopropylaminobutan-1-sulfonsäure, 3-n-Butylaminobutan-1-sulfonsäure, 3-(tert-Butyl)aminobutan-1-sulfonsäure, 3-Pentylaminobutan-1-sulfonsäure, 3-Hexylaminobutan-1-sulfonsäure, 3-Octylaminobutan-1-sulfonsäure, 3-Anilinobutan-1-sulfonsäure, 3-Cyclopropylaminobutan-1-sulfonsäure, 3-Cyclobutylaminobutan-1-sulfonsäure, 3-Cyclopentylaminobutan-1-sulfonsäure, 3-Cyclohexylaminobutan-1-sulfonsäure, die isomeren 3-(Methylcyclohexyl)aminobutan-1-sulfonsäuren, 3-(2,3-Dimethylcyclohexyl)aminobutan-1-sulfonsäure, 3-(3,3,5-Trimethylcyclohexylaminobutan-1-sulfonsäure, 3-(4-tert-Butylcyclohexyl)aminobutan-1-sulfonsäure, 3-Cycloheptylaminobutan-1-sulfonsäure, 3-Cyclooctylaminobutan-1-sulfonsäure, 3-(2-Norbornyl)aminobutan-1-sulfonsäure, 3-(1-Adamantyl)aminobutan-1-sulfonsäure, 3-(3,5-Dimethyl-1-adamantyl)aminobutan-1-sulfonsäure, 4-Methylaminobutan-1-sulfonsäure, 4-Ethylaminobutan-1-sulfonsäure, 4-Propylaminobutan-1-sulfonsäure, 4-Isopropylaminobutan-1-sulfonsäure, 4-n-Butylaminobutan-1-sulfonsäure, 4-(tert-Butyl)aminobutan-1-sulfonsäure, 4-Pentylaminobutan-1-sulfonsäure, 4-Hexylaminobutan-1-sulfonsäure, 4-Octylaminobutan-1-sulfonsäure, 4-Anilinobutan-1-sulfonsäure, 4-Cyclopropylaminobutan-1-sulfonsäure, 4-Cyclobutylaminobutan-1-sulfonsäure, 4-Cyclopentylaminobutan-1-sulfonsäure, 4-Cyclohexylaminobutan-1-sulfonsäure, die isomeren 4-(Methylcyclohexyl)aminobutan-1-sulfonsäuren, 4-(2,3-Dimethylcyclohexyl)aminobutan-1-sulfonsäure, 4-(3,3,5-Trimethylcyclohexylaminobutan-1-sulfonsäure, 4-(4-tert-Butylcyclohexyl)aminobutan-1-sulfonsäure, 4-Cycloheptylaminobutan-1-sulfonsäure, 4-Cyclooctylaminobutan-1-sulfonsäure, 4-(2-Norbornyl)aminobutan-1-sulfonsäure, 4-(1-Adamantyl)aminobutan-1-sulfonsäure, 4-(3,5-Dimethyl-1-adamantyl)aminobutan-1-sulfonsäure, 3-Methylamino-2-methyl-propan-1-sulfonsäure, 3-Ethylamino-2-methyl-propan-1-sulfonsäure, 3-Propylamino-2-methyl-propan-1-sulfonsäure, 3-Isopropylamino-2-methyl-propan-1-sulfonsäure, 3-n-Butylamino-2-methyl-propan-1-sulfonsäure, 3-(tert-Butyl)amino-2-methyl-propan-1-sulfonsäure, 3-Pentylamino-2-methyl-propan-1-sulfonsäure, 3-Hexylamino-2-methyl-propan-1-sulfonsäure, 3-Octylamino-2-methyl-propan-1-sulfonsäure, 3-Anilino-2-methyl-propan-1-sulfonsäure, 3-Cyclopropylamino-2-methyl-propan-1-sulfonsäure, 3-Cyclobutylamino-2-methyl-propan-1-sulfonsäure, 3-Cyclopentylamino-2-methyl-propan-1-sulfonsäure, 3-Cyclohexylamino-2-methyl-propan-1-sulfonsäure, die isomeren 3-(Methylcyclohexyl)amino-2-methyl-propan-1-sulfonsäuren, 3-(2,3-Dimethylcyclohexyl)amino-2-methyl-propan-1-sulfonsäure, 3-(3,3,5-Trimethyl-cyclohexylamino-2-methyl-propan-1-sulfonsäure, 3-(4-tert-Butylcyclohexyl)amino-2-methyl-propan-1-sulfonsäure, 3-Cycloheptylamino-2-methyl-propan-1-sulfonsäure, 3-Cyclooctylamino-2-methyl-propan-1-sulfonsäure, 3-(2-Norbornyl)amino-2-methyl-propan-1-sulfonsäure, 3-(1-Adamantyl)amino-2-methyl-propan-1-sulfonsäure, 3-(3,5-Dimethyl-1-adamantyl)amino-2-methyl-propan-1-sulfonsäure, 3-Methylaminobutan-2-sulfonsäure, 3-Ethylaminobutan-2-sulfonsäure, 3-Propylaminobutan-2-sulfonsäure, 3-Isopropylaminobutan-2-sulfonsäure, 3-n-Butylaminobutan-2-sulfonsäure, 3-(tert-Butyl)aminobutan-2-sulfonsäure, 3-Pentylaminobutan-2-sulfonsäure, 3-Hexylaminobutan-2-sulfonsäure, 3-Octylaminobutan-2-sulfonsäure, 3-Anilinobutan-2-sulfonsäure, 3-Cyclopropylaminobutan-2-sulfonsäure, 3-Cyclobutylaminobutan-2-sulfonsäure, 3-Cyclopentylaminobutan-2-sulfonsäure, 3-Cyclohexylaminobutan-2-sulfonsäure, die isomeren 3-(Methylcyclohexyl)aminobutan-2-sulfonsäuren, 3-(2,3-Dimethylcyclohexyl)aminobutan-2-sulfonsäure, 3-(3,3,5-Trimethylcyclohexylaminobutan-2-sulfonsäure, 3-(4-tert-Butylcyclohexyl)aminobutan-2-sulfonsäure, 3-Cycloheptylaminobutan-2-sulfonsäure, 3-Cyclooctylaminobutan-2-sulfonsäure, 3-(2-Norbornyl)aminobutan-2-sulfonsäure, 3-(1-Adamantyl)amino-2-sulfonsäure und 3-(3,5-Dimethyl-1-adamantyl)aminobutan-2-sulfonsäure.

Besonders bevorzugte Aminosulfonsäuren B) für das erfindungsgemäße Verfahren sind solche der allgemeinen Formel (II), in welcher keiner der Reste R⁴ und R⁵ für Wasserstoff steht.

Ganz besonders bevorzugte Aminosulfonsäuren B) sind 2-Isopropylaminoethan-1-sulfonsäure, 3-Isopropylaminopropan-1-sulfonsäure, 4-Isopropylaminobutan-1-sulfonsäure, 2-Cyclohexylaminoethan-1-sulfonsäure, 3-Cyclohexylaminopropan-1-sulfonsäure und 4-Cyclohexylaminobutan-1-sulfonsäure.

Die Aminosulfonsäuren B) kommen beim erfindungsgemäßen Verfahren vorzugsweise in einer Menge von 0,3 bis 25,0 Gew.-%, besonders bevorzugt von 0,5 bis 15,0 Gew.-%, ganz besonders bevorzugt von 1,0 bis 10,0 Gew.-%, bezogen auf das Gesamtgewicht der Komponenten A) und B), zum Einsatz.

Erfindungswesentlich ist dabei, dass Aminosulfonsäuren B) eingesetzt werden, die einen Wassergehalt von 0,05 bis 1,5 Gew.-%, vorzugsweise 0,1 bis 1,0 Gew.-%, besonders bevorzugt 0,15 bis 0,9 Gew.-%, ganz besonders bevorzugt von 0,2 bis 0,6 Gew.-% aufweisen.

Das Wasser kann auf beliebigen Wegen in die Aminosulfonsäuren B) eingebracht werden, wobei sich diese Wege auch gegenseitig ergänzen können, um zu der gewünschten Gesamtmenge an Wasser zu gelangen. Beispielsweise können die genannten Mengen an Wasser bereits herstellungsbedingt in den Aminosulfonsäuren B) vorliegen. Für den Fall, dass die Aminosulfonsäuren B) herstellungsbedingt mehr als 1,5 % an Wasser enthalten, kann der Wassergehalt beispielsweise durch gezieltes Trocknen, beispielsweise bei erhöhter Temperatur und/oder im Vakuum, auf einen Wert innerhalb des erfindungsgemäß beanspruchten Bereichs eingestellt werden. Darüberhinaus ist es selbstverständlich aber auch möglich, den Wassergehalt der Aminosulfonsäuren B) durch direkte Zugabe entsprechender Mengen an Wasser anzupassen.

Ausgangsverbindungen C) für das erfindungsgemäße Verfahren sind beliebige nichtionisch hydrophile oder hydrophobe Verbindungen, die mindestens eine gegenüber Isocyanaten reaktive Gruppe aufweisen. Die Verbindungen C) sind unterschiedlich zu B). In anderen Worten umfasst die Ausgangskomponente C) mindestens eine nichtionisch hydrophile organische Verbindung, die mindestens eine gegenüber Isocyanaten reaktive Gruppe aufweist, und/oder mindestens eine hydrophobe organische Verbindung, die mindestens eine gegenüber Isocyanaten reaktive Gruppe aufweist.

Geeignete nichtionisch hydrophile Verbindungen C) sind beispielsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole C) sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Nichtionisch hydrophile Verbindungen C) kommen beim erfindungsgemäßen Verfahren, falls überhaupt, in Mengen von bis zu 30 Gew.-%, vorzugsweise bis zu 25 Gew.-%, besonders bevorzugt bis zu 20 Gew.-%, bezogen auf das Ausgangspolyisocyanat A) zum Einsatz.

Geeignete hydrophobe Verbindungen C) sind beispielsweise aliphatische Alkohole oder Fettsäureesteralkohole mit jeweils mindestens 8 Kohlenstoffatomen.

Geeignete aliphatische hydrophobe Alkohole sind beispielweise 1-Octanol, 2-Ethyl-1-hexanol, die isomeren Nonanole, Decanole, Undecanole, Dodecanole, Tridecanole, Tetradecanole, Pentadecanole, Hexadecanole und 3-Phenyl-2-propenol (Zimtalkohol) sowie auf diesen Alkoholen gestartete hydrophobe Polyalkylenoxidalkohole, deren Alkylenoxideinheiten zu mindestens 80 mol-%, vorzugsweise mindestens 90 mol-%, besonders bevorzugt ausschließlich aus Propylenoxideinheiten bestehen.

Geeignete Fettsäureesteralkohole C) sind beispielsweise Veresterungsprodukte hydroxyfunktioneller Fettsäuren, wie z. B. Hydroxyessigsäure, 3-Hydroxypropionsäure, Hydroxybuttersäure, 2-Hydroxybernsteinsäure (Äpfelsäure), 2,3-Dihydroxybernsteinsäure (Weinsäure), 2-Hydroxy-1,2,3-propan-tricarbonsäure (Citronensäure), Hydroxystearinsäure, Ricinolsäure, Salicylsäure und Mandelsäure, mit Alkoholen, wie z. B. Methanol, Ethanol, n-Propanol, Isopropanol, n-Butanol, Isobutanol, sec-Butanol, den isomeren Pentanolen, Hexanolen, Octanolen und Nonanolen, n-Decanol oder n-Dodecanol, bei denen die Summe der Kohlenstoffatome von Fettsäure und Veresterungsalkohol mindestens 8 beträgt.

Hydrophobe Verbindungen C) kommen, falls überhaupt, beim erfindungsgemäßen Verfahren in Mengen von bis zu 30 Gew.-%, vorzugsweise bis zu 20 Gew.-%, besonders bevorzugt bis zu 10 Gew.-%, bezogen auf das Ausgangspolyisocyanat A) zum Einsatz.

Die Umsetzung der Polyisocyanatkomponente A) mit den Aminosulfonsäuren B) und gegebenenfalls weiteren nichtionisch hydrophilen oder hydrophoben Verbindungen C) erfolgt beim erfindungsgemäßen Verfahren in Gegenwart mindestens eines tertiären Amins D), das zur Neutralisation der Sulfonsäuregruppen der Ausgangskomponente B) dient.

Geeignete tertiäre Amine D) sind beispielsweise tertiäre Monoamine, wie z. B. Trimethylamin, Triethylamin, Tripropylamin, Tributylamin, N,N-Dimethylethylamin, N,N-Dimethylpropylamin, N,N-Dimethylisopropylamin, N,N-Dimethylbutylamin, N,N-Dimethylisobutylamin, N,N-Dimethyloctylamin, N,N-Dimethyl-2-ethylhexylamin, N,N-Dimethyllaurylamin, N,N-Diethylmethylamin, N,N-Diethylpropylamin, N,N-Diethylbutylamin, N,N-Diethylhexylamin, N,N-Diethyloctylamin, N,N-Diethyl-2-ethylhexylamin, N,N-Diethyllaurylamin, N,N-Diisopropylmethylamin, N,N-Diisopropylethylamin, N,N-Diisopropylbutylamin, N,N-Diisopropyl-2-ethylhexylamin, N,N-Dioctylmethylamin, N,N-Dimethylallylamin, N,N-Dimethylbenzylamin, N,N-Diethylbenzylamin, N,N-Dibenzylmethylamin, Tribenzylamin, N,N-Dimethyl-4-methylbenzylamin, N,N-Dimethylcyclohexylamin, N,N-Diethylcyclohexylamin, N,N-Dicyclohexylmethylamin, N,N-Dicyclohexylethylamin, Tricyclohexylamin, N-Methylpyrrolidin, N-Ethylpyrrolidin, N-Propylpyrrolidin, N-Butylpyrrolidin, N-Methylpiperidin, N-Ethylpiperidin, N-Propylpiperidin, N-Butylpiperidin, N-Methylmorpholin, N-Ethylmorpholin, N-Propylmorpholin, N-Butylmorpholin, N-sec-Butylmorpholin, N-tert-Butylmorpholin, N-Isobutylmorpholin und Quinuclidin oder tertiäre Diamine, wie z. B. 1,3-Bis-(dimethylamino)-propan, 1,4-Bis-(dimethylamino)-butan und N,N'-Dimethylpiperazin, oder beliebige Gemische solcher tertiären Amine.

Geeignete, jedoch weniger bevorzugte tertiäre Amine D) sind daneben auch solche, die gegenüber Isocyanaten reaktive Gruppen tragen, beispielsweise Alkanolamine, wie z. B. Dimethylethanolamin, Methyldiethanolamin oder Triethanolamin.

Bevorzugte tertiäre Amine D) sind N,N-Dimethylbutylamin, N,N-Dimethyl-2-ethylhexylamin, N,N-Diethylmethylamin, N,N-Diisopropylethylamin, N,N-Diisopropyl-2-ethylhexylamin N,N-Dimethylcyclohexylamin, N,N-Dicyclohexylmethylamin, N-Methylpyrrolidin, N-Methylpiperidin, N-Ethylpiperidin, N-Methylmorpholin, N-Ethylmorpholin, N-Isobutylmorpholine oder deren Gemische.

Besonders bevorzugt sind N,N-Dimethylbutylamin, N,N-Diethylmethylamin, N,N-Diisopropylethylamin, N,N-Dimethylcyclohexylamin, N-Methylpiperidin, N-Ethylmorpholin oder deren Gemische.

Die genannten Neutralisationsamine D) kommen beim erfindungsgemäßen Verfahren in solchen Mengen zum Einsatz, die einem Äquivalentverhältnis von tertiären Aminogruppen zu Sulfonsäuregruppen der Komponente B) von 0,2 bis 2,0, vorzugsweise von 0,5 bis 1,5, besonders bevorzugt 0,95 bis 1,05 entsprechen.

Beim erfindungsgemäßen Verfahren können gegebenenfalls weitere Hilfs- und Zusatzstoffe E), wie z. B. Antioxidantien und/oder Katalysatoren zum Einsatz kommen.

Geeignete Antioxidantien E) sind beispielsweise die aus der Kunststoffchemie an sich bekannten antioxidativ wirkenden Verbindungen, wie z. B. bevorzugt sterisch gehinderte Phenole und/oder di- oder trisubstituierte Phosphite.

Geeignete sterisch gehinderte Phenole E) sind beispielsweise 2,6-Di-tert-butylphenol, 2,4-Dimethyl-6-tert-butylphenol, 2,6-Di-tert-butyl-4-methylphenol, Triethylenglykol-bis(3-tert-butyl-4-hydroxy-5-methylphenyl)propionat, Octadecyl-3-(3,5-di-tert-butyl-4-hydroxyphenyl) propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxyphenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl) propionsäureamid, 1,2-Bis(3,5-di-tert-butyl-4-hydroxyphenylpropionsäure)hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl) isocyanurat und 2,5-Di-tert-amylhydrochinon, die gegebenenfalls in Kombination mit Didodecyl-3,3'-thiodipropionat oder Dioctadecyl-3,3'-thiodipropionat eingesetzt werden.

Geeignete Phosphite E) sind beispielsweise di- oder vorzugsweise trisubstituierte Phosphite, wie z. B. Dibutylphosphit und Dibenzylphosphit, Triethylphosphit und Tributylphosphit. Vorzugsweise handelt es sich bei den Antioxidantien E) vom Phosphit-Typ aber um trisubstituierte Phosphite, bei denen mindestens einer der Substituenten einen gegebenenfalls substituierten aromatischen Rest mit 6 bis 18 Kohlenstoffatomen oder einen linearen oder verzweigten aliphatischen Rest mit 9 bis 18 Kohlenstoffatomen darstellt, beispielsweise um Arylphosphite, wie z. B. Triphenylphosphit, Tris(2,4-di-tert-butylphenyl)phosphit oder Tris(nonylphenyl)phosphit, Alkyl-arylphosphite, wie z. B. Diphenyl-isooctylphosphit, Diphenyl-isodecylphosphit, Diisodecyl-phenylphosphit, Diisooctyloctylphenylphosphit, Phenyl-neopentylglykolphosphit oder 2,4,6-Tri-tert.-butylphenyl-(2-butyl-2-ethyl-1,3-propandiol)phosphit, Alkylphosphite, wie z. B. Triisodecylphosphit, Trilaurylphosphit oder Tris(tridecyl)phosphit, oder aromatisch bzw. aliphatisch substituierte Diphosphite, wie z. B. Diisodecyl-pentaerythritdiphosphit, Distearyl-pentaerythritdiphosphit, Bis(2,4-di-tert.-butylphenyl)pentaerythritdiphosphit oder Tetraphenyl-dipropylenglykoldiphosphit.

Bevorzugte Antioxidantien E) für das erfindungsgemäße Verfahren sind sterisch gehinderte Phenole, die 2,6-Di-tert-butyl-4-methylphenol-Strukturen enthalten, sowie trisubstituierte Phosphite, die mindestens einen linearen oder verzweigten aliphatischen Subsituenten mit 10 bis 16 Kohlenstoffatomen oder einen Phenylrest tragen. Besonders bevorzugte Antioxidantien D) sind 2,6-Di-tert-butyl-4-methylphenol, Ester der 3-(3,5-Di-tert-butyl-4-hydroxyphenyl)propionsäure mit aliphatischen verzweigten C7- bis C9-Alkoholen, Octadecyl-3-(3,5-di-tert-butyl-4-hydroxyphenyl)propionat, Triisodecylphosphit, Phenyldiisodecylphospit und/oder Diphenylisodecylphospit.

Ganz besonders bevorzugte Antioxidantien E) für das erfindungsgemäße Verfahren sind 2,6-Di-tert-butyl-4-methylphenol und Ester der 3-(3,5-Di-tert-butyl-4-hydroxyphenyl)propionsäure mit aliphatischen verzweigten C7- bis C9-Alkoholen.

Falls überhaupt, kommen Antioxidantien E) beim erfindungsgemäßen Verfahren sowohl einzeln als auch in beliebigen Kombinationen untereinander in Mengen von 0,001 bis 3,0 Gew. %, bevorzugt 0,002 bis 2,0 Gew.-%, besonders bevorzugt von 0,005 bis 1,0 Gew.-%, ganz besonders bevorzugt von 0,01 bis 0,5 Gew.-%, berechnet als Gesamtmenge an eingesetzten Antioxidantien, bezogen auf die Menge an Ausgangspolyisocyanat A), zum Einsatz.

Die Antioxidantien E) können dabei in der oben angegebenen Menge einem oder mehreren der Reaktionspartner, der Polyisocyanatkomponente A), der Aminosulfonsäure B), den gegebenenfalls mitzuverwendenden nichtionisch hydrophilen oder hydrophoben Verbindungen C) und/oder dem tertiären Amin D) bereits vor Beginn der eigentlichen Umsetzung zugemischt werden. Sie können aber auch zu jedem beliebigen Zeitpunkt während des Zudosierens der Reaktionspartner oder auch im Anschluss daran, vorzugsweise zu Beginn des Zudosierens, dem Reaktionsgemisch zugegeben werden.

Falls überhaupt, wird das Antioxidans E) bevorzugt vor Beginn der Umsetzung der Polyisocyanatkomponente A) zugesetzt.

Zur Durchführung des erfindungsgemäßen Verfahrens werden die Ausgangskomponenten A), B) und gegebenenfalls C) in Gegenwart eines tertiären Amins D) und gegebenenfalls in Gegenwart weiterer Hilfs- und Zusatzstoffe E) bei Temperaturen von 40 bis 150 °C, vorzugsweise 50 bis 130 °C, besonders bevorzugt 70 bis 110°C, unter Einhaltung eines Äquivalent-Verhältnisses von NCO-Gruppen zu gegenüber NCO-Gruppen reaktiven Gruppen von 2:1 bis 400:1, vorzugsweise von 4:1 bis 250:1, vorzugsweise bis zum Erreichen des theoretisch errechneten NCO-Gehalts miteinander umgesetzt, wobei der Verlauf der Umsetzung durch z. B. titrimetrische Bestimmung des NCO-Gehaltes verfolgt werden kann. Die Bestimmung des NCO-Gehaltes erfolgt vorzugsweise titrimetrisch nach DIN EN ISO 11909:2007-05.

Die Gegenwart des tertiären Amins D) katalysiert die Reaktion der Komponenten A), B) und gegebenenfalls C) in der Regel ausreichend schnell, jedoch können zur Beschleunigung der Umsetzung beim erfindungsgemäßen Verfahren gegebenenfalls übliche aus der Polyurethanchemie bekannten Katalysatoren als weitere Hils- und Zusatzstoffe E) mitverwendet werden, beispielsweise weitere tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Di¬butylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat oder beliebige Gemische solcher Katalysatoren.

Diese Katalysatoren E) kommen beim erfindungsgemäßen Verfahren, falls überhaupt, in einer Menge von 0,001 bis 2 Gew.-%, vorzugsweise 0,005 bis 0,5 Gew.-%, bezogen auf das Gesamtgewicht der Reaktionspartner zum Einsatz.

Eine weitere bevorzugte Ausführungsform ist ein Verfahren zur Herstellung Sulfonatgruppen enthaltender Polyisocyanate, umfassend eine Umsetzung von
A) mindestens einer Polyisocyanatkomponente mit
B) mindestens einer Aminosulfonsäure, die mindestens eine Aminogruppe und mindestens eine Sulfonsäuregruppe aufweist, und gegebenenfalls
C) mindestens einer nichtionisch hydrophilen organischen Verbindung, die mindestens eine gegenüber Isocyanaten reaktive Gruppe aufweist, und/oder mindestens einer hydrophoben organischen Verbindung, die mindestens eine gegenüber Isocyanaten reaktive Gruppe aufweist, in Gegenwart,
D) mindestens eines tertiären Amins und gegebenenfalls in Gegenwart
E) weiterer Hilfs- und Zusatzstoffe
dadurch gekennzeichnet,
dass die Aminosulfonsäure B) einen Wassergehalt von 0,05 bis 1,5 Gew.-% aufweist.

Der Wassergehalt der Ausgangskomponenten C), D) und E) ist für das erfindungsgemäße Verfahren von untergeordneter Bedeutung. Er liegt, wie für Rohstoffe mit "PU-Qualität" üblich, in der Regel unterhalb von 500 ppm. Erfindungsrelevant ist, dass die eingesetzten Aminosulfonsäuren B) einen Wassergehalt im oben genannten Bereich aufweisen. Der Gesamtgehalt an Wasser im die Ausgangskomponenten A), B), D), gegebenenfalls C) und gegebenenfalls E) umfassenden Reaktionsgemisch liegt beim erfindungsgemäßen Verfahren vorzugsweise bei weniger als 0,5 Gew.- %, besonders bevorzugt weniger als 0,2 Gew.-%, ganz besonders bevorzugt bei weniger als 0,1 Gew.-%. Vorstehendes Reaktionsgemisch besteht vorzugsweise aus den Ausgangskomponenten A), B), D), gegebenenfalls C) und gegebenenfalls E) und weist einen Gesamtgehalt an Wasser von weniger als 0,5 Gew.-%, besonders bevorzugt weniger 0,2 Gew.-%, ganz besonders bevorzugt bei weniger als 0,1 Gew.-% auf.

Eine besonders bevorzugte Ausführungsform ist ein Verfahren zur Herstellung Sulfonatgruppen enthaltender Polyisocyanate, umfassend eine Umsetzung von
A) mindestens einer Polyisocyanatkomponente mit
B) mindestens einer Aminosulfonsäure, die mindestens eine Aminogruppe und mindestens eine Sulfonsäuregruppe aufweist, und gegebenenfalls
C) mindestens einer nichtionisch hydrophilen organischen Verbindung, die mindestens eine gegenüber Isocyanaten reaktive Gruppe aufweist, und/oder mindestens einer hydrophoben organischen Verbindung, die mindestens eine gegenüber Isocyanaten reaktive Gruppe aufweist, in Gegenwart,
D) mindestens eines tertiären Amins und gegebenenfalls in Gegenwart
E) weiterer Hilfs- und Zusatzstoffe
dadurch gekennzeichnet,
dass die Aminosulfonsäure B) einen Wassergehalt von 0,05 bis 1,5 Gew.-% aufweist und die Komponenten A), C), D) und E) jeweils einen Wassergehalt von unterhalb 500 Gew.-ppm, jeweils bezogen auf die jeweilige Gesamtmenge der eingesetzten Komponente, aufweisen. Wie bei allen anderen genannten Ausführungsformen ist es auch hierbei ganz besonders bevorzugt, dass der Gesamtgehalt an Wasser im die Ausgangskomponenten A), B), D), gegebenenfalls C) und gegebenenfalls E) umfassenden Reaktionsgemisch bei weniger als 0,5 Gew.-%, besonders bevorzugt weniger als 0,2 Gew.-%, ganz besonders bevorzugt bei weniger als 0,1 Gew.-% beträgt. Vorstehendes Reaktionsgemisch besteht vorzugsweise aus den Ausgangskomponenten A), B), D), gegebenenfalls C) und gegebenenfalls E) und weist einen Gesamtgehalt an Wasser von weniger als 0,5 Gew.-%, besonders bevorzugt weniger 0,2 Gew.-%, ganz besonders bevorzugt bei weniger als 0,1 Gew.-% auf.

Das erfindungsgemäße Verfahren wird vorzugsweise lösemittelfrei durchgeführt. Gegebenenfalls können aber auch geeignete, gegenüber den reaktiven Gruppen der Ausgangskomponenten, insbesondere gegenüber Isocyanatgruppen inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel.

Beim erfindungsgemäßen Verfahren verläuft aufgrund der Verwendung von Aminosulfonsäuren mit Wassergehalten im oben angegebenen Konzentrationsbereich von 0,05 bis 1,5 Gew.-% die Umsetzung der Reaktionspartner bei gegebener Reaktionstemperatur deutlich schneller, als bei analogen Reaktionsansätzen, in denen Aminosulfonsäuren mit Wassergehalten von weniger als 0,05 oder mehr als 1,5 Gew.-% eingesetzt werden. Man erhält dabei als erfindungsgemäße Verfahrensprodukte klare, Sulfonatgruppen enthaltenden Polyisocyanate, die sich leicht, ohne Einsatz hoher Scherkräfte durch bloßes Einrühren in Wasser in sedimentationsstabile Dispersionen überführen lassen. Diese zeichnen sich im direkten Vergleich zu Dispersionen analog aufgebauter Sulfonatgruppen enthaltender Polyisocyanate, die unter Verwendung von Aminosulfonsäuren mit niedrigerem oder höherem Wassergehalt hergestellt wurden, durch geringere mittlere Teilchengröße aus, was bei Verwendung als Vernetzkomponente in wässrigen Lacksystemen zu Beschichtungen höherer Transparenz und höherem Glanz führt.

Bei der Umsetzung von Polyisocyanaten mit Aminosulfonsäuren mit Wassergehalten von mehr als 1,5 Gew.-% ist es darüber hinaus sehr häufig nicht möglich, klare transparente Produkte zu erhalten. Aufgrund zunehmder Harnstoffbildung entstehen trübe, stark klumpige Polyisocyanatgemische, die als Vernetzerkomponenten für wässrige Beschichtungsmittel ungeeignet sind.

Gegebenenfalls können den erfindungsgemäßen Sulfonatgruppen enthaltenden Polyisocyanaten vor der Emulgierung beliebige weitere nichthydrophilierte Polyisocyanate, beispielsweise solche der als geeignete Ausgangspolyisocyanate A) genannten Art, zugesetzt werden, wodurch Polyisocyanatgemische erhalten werden, die ebenfalls erfindungsgemäße Polyisocyanatgemische darstellen, da diese im allgemeinen aus Gemischen aus
(i) erfindungsgemäß mit Sulfonatgruppen hydrophil modifizierten Polyisocyanaten und
(ii) unmodifizierten Polyisocyanaten der beispielhaft genannten Art bestehen.

In solchen Mischungen übernehmen die erfindungsgemäßen Sulfonatgruppen enthaltenden Polyisocyanate die Funktion eines Emulgators für den nachträglich zugemischten Anteil an nichthydrophilen Polyisocyanaten.

Die erfindungsgemäßen Polyisocyanatgemische stellen wertvolle Ausgangsmaterialien zur Herstellung von Polyurethankunststoffen nach dem Isocyanat-Polyadditionsverfahren dar.

Hierzu werden die Polyisocyanatgemische vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen Sulfonatgruppen enthaltenden Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1.000 bis 20.000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Ein weiterer Gegenstand der vorliegenden Erfindung ist ein Beschichtungsmittel enthaltend mindestens ein erfindungsgemäßes Sulfonatgruppen enthaltendes Polyisocyanat.

Bei der erfindungsgemäßen Verwendung als Vernetzerkomponente für wäßrige Lackbindemittel werden die erfindungsgemäßen Sulfonatgruppen enthaltenden Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Sulfonatgruppen enthaltenden Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Ein weiterer Gegenstand der vorliegenden Erfindung ist ein Substrat, beschichtet mit einem gegebenenfalls unter Wärmeeinwirkung ausgehärteten erfindungsgemäßen Beschichtungsmittel.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen Sulfonatgruppen enthaltenden Polyisocyanatgemische hervorragend als Vernetzer für wäßrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Die für das erfindungsgemäße Verfahren als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Rest-Monomeren Gehalte wurden nach DIN EN ISO 10283:2007-11 gaschromatographisch mit internem Standard gemessen.

Wassergehalte wurden durch volumetrische Titration nach Karl Fischer nach DIN 53715 (erstellt in Anlehnung an DIN 51777 Teil 1 (Ausgabe 1973)) unter Verwendung eines Titrierautomaten Titrando 841 der Fa. Methrom bestimmt. Der Messbereich dieser Methode liegt bei 0,01 bis 99 Gew.%.

Als Maß für die Emulgierbarkeit der hydrophilen Polyisocyanate dienen die mittleren Teilchengrößen (MTG) 25 %iger wässriger Emulsionen. Dazu wurden jeweils 25 g der erfindungsgemäßen Polyisocyanatgemisches in einem Erlenmeyerkolben mit 75 g entionisiertem Wasser, entsprechend einem Festkörpergehalt von jeweils 25 Gew.-%, versetzt und anschließend jeweils 1 min mit Hilfe eines Magnetrührers bei 900 U/min gerührt. Anschließend wurden die mittlere Teilchengrößen [nm] der auf diese Weise erhaltenen wässrigen Emulsionen mit einem Zetasizer, Typ DTS 5100, der Fa. Malvern Instruments GmbH (DE) bestimmt. Je kleiner die mittlere Teilchengröße, desto je feiner die Verteilung eines Vernetzers in der wäßrigen Phase (Lackbindemittel) und desto klarer und brillanter die erhältlichen Lackfilme.

Die Messung der Hazen-Farbzahl erfolgte spektrofotometrisch nach DIN EN ISO 6271-2:2005-03 mit einem LICO 400-Spektrofotometer der Fa. Lange, DE.

### Ausgangsverbindungen

### Polyisocyanate A)

### Ausgangspolyisocyanat A1)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,7 % |
| NCO-Funktionalität: | 3,4 |
| Monomeres HDI: | 0,1 % |
| Viskosität (23°C): | 3080 mPas |
| Farbzahl (Hazen): | 18 |

### Ausgangspolyisocyanat A2)

Isocyanuratgruppen enthaltendes IPDI-Polyisocyanat, hergestellt durch katalytische Trimerisierung von IPDI nach Beispiel 2 der EP-A-0 003 765. Die Reaktion wurde bei einem NCO-Gehalt der Rohmischung von 30,1 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes IPDI durch Dünnschichtdestillation bei einer Temperatur von 170°C und einem Druck von 0,3 mbar abgetrennt und das erhaltene Festharz mit Butylacetat bis zu einem Festkörpergehalt von 70 % verdünnt.

| | |
|---|---|
| NCO-Gehalt: | 11,9 % |
| NCO-Funktionalität: | 3,3 |
| Monomeres IPDI: | 0,28 % |
| Viskosität (23°C): | 620 mPas |
| Farbzahl (Hazen): | 14 |

### Ausgangspolyisocyanat A3)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| NCO-Funktionalität: | 3,5 |
| monomeres PDI: | 0,09 % |
| Viskosität (23 °C): | 9850 mPas |
| Farbzahl (Hazen): | 34 |

### Aminosulfonsäuren B)

Als Aminosulfonsäuren kamen 3-(Cyclohexylamino)-propansulfonsäure (Sigma-Aldrich Chemie Gmbh, München, DE), Wassergehalt der Lieferform: 1,7 %, und 4-(Cyclohexylamino)-butansulfonsäure (Santa Cruz Biotechnology, Inc., Heidelberg, DE), Wassergehalt der Lieferform: 4,5 %, zum Einsatz.

Ausgehend von diesen Lieferformen wurden jeweils durch Trocknen im Vakuum (100°C / ca. 0,5 mbar) über Zeiten von 30 min bis zu 12 h unterschiedliche Wassergehalte eingestellt. Die Wassergehalte der in den Beispielen eingesetzten Aminosulfonsäuren sind im Folgenden dort jeweils angegeben.

### Nichtionisch hydrophile organische Verbindung C)

Methoxypolyethylenglykol MPEG 500 (Ineos Oxide, Köln, DE), Wassergehalt 0,02 %.

### Tertiäres Amin D)

Als tertiäres Amin kam in allen Beispielen N,N-Dimethylcyclohexylamin (Merck Chemicals GmbH, Darmstadt, DE) mit einem Wassergehalt von 0,03% zum Einsatz.

### Beispiel 1 (nicht erfindungsgemäß)

968,5 g (5,01 val) des Isocyanuratgruppen-haltigen Ausgangspolyisocyanates A1) wurden zusammen mit 20,0 g (0,09 val) 3-(Cyclohexylamino)-propansulfonsäure (CAPS), Wassergehalt 0,03 %, 11,5 g (0,09 mol) Dimethylcyclohexylamin und 0,05 g (50 ppm) 2,6-Di-tert-butyl-4-methylphenol unter trockenem Stickstoff bei 100°C gerührt bis nach 5:30 Stunden ein weitestgehend klares Sulfonatgruppen enthaltendes Polyisocyanatgemisch vorlag. Nach Abkühlen auf Raumtemperatur und Filtration über eine Filterschicht T 5500 (Fa. Seitz) wurden folgende Kenndaten ermittelt:

| | |
|---|---|
| NCO-Gehalt: | 20,6 % |
| NCO-Funktionalität: | 3,3 |
| Viskosität (23 °C): | 6400 mPas |
| Farbzahl (Hazen): | 22 |
| Emulgierbarkeit (MTG): | 731 nm |

### Beispiel 2 (erfindungsgemäß)

Der Versuch aus Beispiel 1 wurde unter Verwendung von CAPS mit einem Wassergehalt von 0,15 % wiederholt. Nach einer Reaktionszeit von 4:15 Stunden erhielt man ein klares, Sulfonatgruppen enthaltendes Polyisocyanatgemisch, das nach Filtration folgende Kenndaten aufwies:

| | |
|---|---|
| NCO-Gehalt: | 20,7 % |
| NCO-Funktionalität: | 3,3 |
| Viskosität (23 °C): | 6440 mPas |
| Farbzahl (Hazen): | 19 |
| Emulgierbarkeit (MTG): | 329 nm |

Der Vergleich der Beispiele 1 (nicht erfindungsgemäß) und 2 (erfindungsgemäß) zeigt, dass die Reaktion bei erfindungsgemäßer Verwendung der Aminosulfonsäure mit höherem Wassergehalt deutlich schneller verläuft und man dabei ein hydrophiles Polyisocyanat erhält, das bei ähnlichen Kenndaten eine deutlich bessere Emulgierbarkeit aufweist.

### Beispiel 3 bis 15 (erfindungsgemäß und Vergleich)

Nach dem in Beispiel 1 und 2 beschriebenen Verfahren wurden unterschiedliche Polyisocyanate A) unter Verwendung von Aminosulfonsäuren B) mit unterschiedlichen Wassergehalten umgesetzt. Die nachfolgende Tabelle 1 zeigt die Zusammensetzung der Reaktionsansätze in Gew.-Teilen sowie die Kenndaten der erhaltenen Produkte.

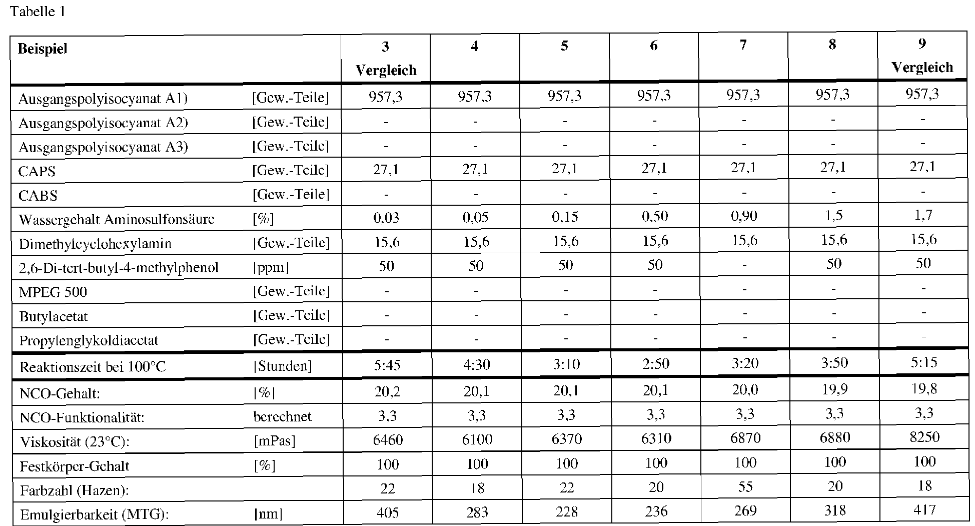

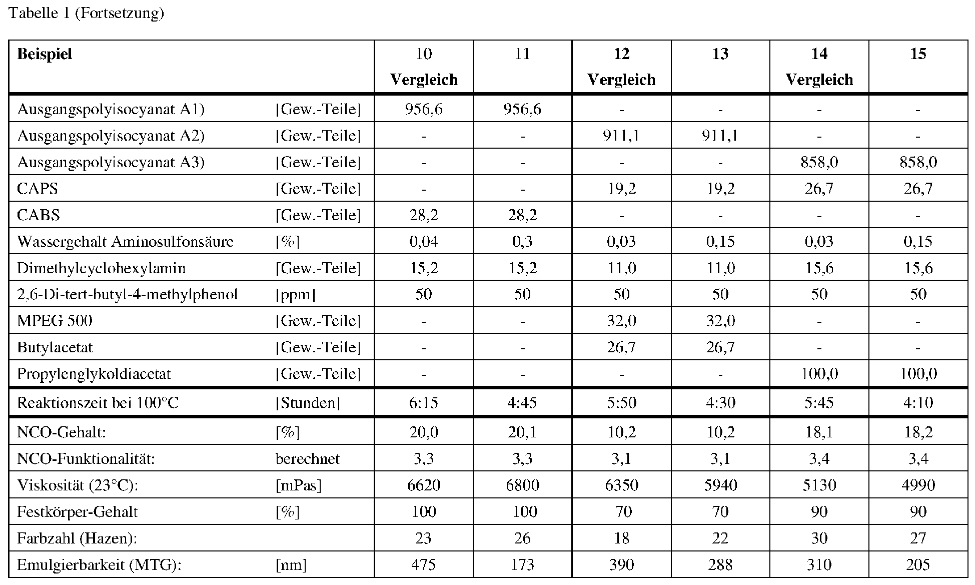

Die Beispiele 3 bis 15 zeigen, dass die Umsetzung von Polyisocyanaten mit Aminosulfonsäuren, die sehr niedrige Wassergehalte von <0,05 % aufweisen (Beispiele 3, 10, 12, 14), deutlich längere Reaktionszeiten erfordert als die Umsetzung mit Aminosulfonsäuren, deren Wassergehalt im erfindungsgemäß definierten Bereich liegt. Die dabei erhaltenen hydrophilen Polyisocyanate zeigen im Vergleich zu erfindungsgemäß hergestellten Produkten bei ansonsten gleicher Produktzusammensetzung eine deutlich schlechtere Emulgierbarkeit. Die Verwendung einer Aminosulfonsäure mit einem Wassergehalt > 1,5 % (Beispiel 9) führt aufgrund vermehrter Harnstoffbildung zu einem Produkt mit niedrigerem NCO-Gehalt und erhöhter Viskosität, das sich ebenfalls deutlich schlechter in Wasser emulgieren lässt als die Polyisocyanate, die unter Verwendung von Aminosulfonsäuren mit Wassergehalten im beanspruchten Bereich hergestellt wurden.

### Beispiel 16 (nicht erfindungsgemäß)

50,0 g Dimethylcyclohexylamin, Wassergehalt 0,03 %, wurden bei Raumtemperatur mit 1,3 g Wasser versetzt und die Mischung durch 10 minütiges Rühren homogenisiert. Der Wassergehalt des Dimethylcyclohexylamins betrug anschließend 2,56 %.

956,9 g (4,94 val) des Isocyanuratgruppen-haltigen Ausgangspolyisocyanates A1) wurden zusammen mit 27,1 g (0,12 val) 3-(Cyclohexylamino)-propansulfonsäure (CAPS), Wassergehalt 0,03 %, 16,0 g (0,12 mol) des oben beschriebenen Dimethylcyclohexylamins, Wassergehalt 2,56 %, und 0,05 g (50 ppm) 2,6-Di-tert-butyl-4-methylphenol unter trockenem Stickstoff bei 100°C für 5:00 Stunden gerührt. Nach Abkühlen auf Raumtemperatur und Filtration über eine Filterschicht T 5500 (Fa. Seitz) wurde ein Sulfonatgruppen enthaltendes Polyisocyanat mit folgenden Kenndaten erhalten:

| | |
|---|---|
| NCO-Gehalt: | 20,0 % |
| NCO-Funktionalität: | 3,3 |
| Viskosität (23 °C): | 7210 mPas |
| Farbzahl (Hazen): | 18 |
| Emulgierbarkeit (MTG): | 576 nm |

Der Gesamt-Wassergehalt im Reaktionsansatz betrug beim nicht erfindungsgemäßen Beispiel 16 ebenso wie beim erfindungsgemäßen Beispiel 8 jeweils 0,041 %. Der Vergleich der Beispiele zeigt, dass das erhaltene hydrophile Polyisocyanatgemisch aus Beispiel 16 bei ansonsten gleicher Produktzusammensetzung eine höhere Viskosität und eine deutlich schlechtere Emulgierbarkeit aufweist.

## Patentansprüche

1. Verfahren zur Herstellung Sulfonatgruppen enthaltender Polyisocyanate, umfassend eine Umsetzung von
A) mindestens einer Polyisocyanatkomponente mit
B) mindestens einer Aminosulfonsäure, die mindestens eine Aminogruppe und mindestens eine Sulfonsäuregruppe aufweist, und gegebenenfalls
C) mindestens einer nichtionisch hydrophilen oder hydrophoben organischen Verbindung, die mindestens eine gegenüber Isocyanaten reaktive Gruppe aufweist, in Gegenwart
D) mindestens eines tertiären Amins und gegebenenfalls in Gegenwart
E) weiterer Hilfs- und Zusatzstoffe
**dadurch gekennzeichnet,**
**dass** die Aminosulfonsäure B) einen Wassergehalt von 0,05 bis 1,5 Gew.-% aufweist.

2. Verfahren gemäß Anspruch 1, **dadurch gekennzeichnet, dass** es sich bei der Polyisocyanatkomponente A) um Polyisocyanate mit Uretdion-, Isocyanurat-, Allophanat-, Biuret-, Iminooxadiazindion- und/oder Oxadiazintrionstruktur mit ausschließlich aliphatisch und/oder cycloaliphatisch gebundenen Isocyanatgruppen handelt.

3. Verfahren gemäß Anspruch 1 oder 2, **dadurch gekennzeichnet, dass** es sich bei der Aminosulfonsäure B) um substituierte aromatische Sulfonsäuren handelt, die bis zu drei Sulfonsäuregruppen tragen können und bis zu drei primäre oder sekundäre Aminogruppen aufweisen, wobei die Positionen am aromatischen Ring in ortho-Stellung zur Aminogruppe unsubstituiert sind.

4. Verfahren gemäß Anspruch 3, **dadurch gekennzeichnet, dass** es sich bei der Aminosulfonsäurekomponente B) um 4-Aminotoluol-2-sulfonsäure, 5-Aminotoluol-2-sulfonsäure und/oder 2-Aminonaphthalin-4-sulfonsäure handelt.

5. Verfahren gemäß Anspruch 1 und 2, **dadurch gekennzeichnet, dass** es sich bei der Aminosulfonsäurekomponente B) um aminofunktionelle Sulfonsäuren der allgemeinen Formel (II) 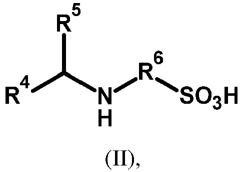 in welcher R⁴ und R⁵ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁴ und R⁵ auch in Kombination untereinander und gegebenenfalls mit einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁶ für einen linearen oder verzweigten aliphatischen Rest mit 2 bis 6 Kohlenstoffatomen steht, handelt.

6. Verfahren gemäß Anspruch 5, **dadurch gekennzeichnet, dass** es sich bei der Aminosulfonsäurekomponente B) um 2-Isopropylaminoethan-1-sulfonsäure, 3-Isopropylaminopropan-1-sulfonsäure, 4-Isopropylaminobutan-1-sulfonsäure, 2-Cyclohexylaminoethan-1-sulfonsäure, 3-Cyclohexylaminopropan-1-sulfonsäure und/oder 4-Cyclohexylaminobutan-1-sulfonsäure handelt.

7. Verfahren gemäß einem der Ansprüche 1 bis 6, **dadurch gekennzeichnet, dass** die Aminosulfonsäurekomponente B) in einer Menge von 0,3 bis 25,0 Gew.-%, besonders bevorzugt von 0,5 bis 15,0 Gew.-%, ganz besonders bevorzugt von 1,0 bis 10,0 Gew.-%, bezogen auf das Gesamtgewicht der Komponenten A) und B), zum Einsatz kommt.

8. Verfahren gemäß einem der Ansprüche 1 bis 7, **dadurch gekennzeichnet, dass** es sich bei den nichtionisch hydrophilen oder hydrophoben Verbindungen C) um reine Polyethylenoxidpolyetheralkohole und/oder gemischte Polyalkylenoxidpolyetheralkohole, deren Alkylenoxideinheiten zu mindestens 70 mol-% aus Ethylenoxideinheiten bestehen, und/oder aliphatische Alkohole oder Fettsäureesteralkohole, die jeweils mindestens 8 Kohlenstoffatome aufweisen, handelt.

9. Verfahren gemäß einem der Ansprüche 1 bis 8, **dadurch gekennzeichnet, dass** es sich bei den tertiären Aminen D) um N,N-Dimethylbutylamin, N,N-Dimethyl-2-ethylhexylamin, N,N-Diethylmethylamin, N,N-Diisopropylethylamin, N,N-Diisopropyl-2-ethylhexylamin N,N-Dimethylcyclohexylamin, N,N-Dicyclohexylmethylamin, N-Methylpyrrolidin, N-Methylpiperidin, N-Ethylpiperidin, N-Methylmorpholin, N-Ethylmorpholin, N-Isobutylmorpholine oder deren Gemische handelt.

10. Verfahren gemäß einem der Ansprüche 1 bis 9, **dadurch gekennzeichnet, dass** es sich bei den Hilfs- und Zusatzstoffen E) um Antioxidantien und/oder Katalysatoren handelt.

11. Verfahren nach einem der Ansprüche 1 bis 10, **dadurch gekennzeichnet, dass** die Aminosulfonsäuren B) einen Wassergehalt 0,1 bis 1,0 Gew.-%, besonders bevorzugt 0,15 bis 0,9 Gew.-%, ganz besonders bevorzugt von 0,2 bis 0,6 Gew.-% aufweisen.

12. Sulfonatgruppen enthaltende Polyisocyanate, erhältlich oder erhalten nach einem Verfahren gemäß einem der Ansprüche 1 bis 11.

13. Verwendung der Sulfonatgruppen enthaltenden Polyisocyanate gemäß Anspruch 12 als Ausgangskomponente bei der Herstellung von Polyurethankunststoffen.

14. Beschichtungsmittel enthaltend Sulfonatgruppen enthaltende Polyisocyanate gemäß Anspruch 12.

15. Substrat, beschichtet mit einem gegebenenfalls unter Wärmeeinwirkung ausgehärteten Beschichtungsmittel gemäß Anspruch 14.

## Claims

1. Process for producing polyisocyanates containing sulfonate groups, comprising a reaction of
A) at least one polyisocyanate component with
B) at least one aminosulfonic acid comprising at least one amino group and at least one sulfonic acid group, and optionally
C) at least one non-ionically hydrophilic or hydrophobic organic compound comprising at least one group reactive to isocyanates, in the presence of
D) at least one tertiary amine and optionally in the presence of
E) other auxiliaries and additives
**characterized in that**
the aminosulfonic acid B) has a water content of 0.05 to 1.5% by weight.

2. Process according to Claim 1, **characterized in that** the polyisocyanate component A) comprises polyisocyanates having a uretdione, isocyanurate, allophanate, biuret, iminooxadiazinedione and/or oxadiazinetrione structure having exclusively aliphatically and/or cycloaliphatically bonded isocyanate groups.

3. Process according to Claim 1 or 2, **characterized in that** the aminosulfonic acid B) comprises substituted aromatic sulfonic acids which may bear up to three sulfonic acid groups and comprise up to three primary or secondary amino groups, wherein the positions on the aromatic ring in the position ortho to the amino group are unsubstituted.

4. Process according to Claim 3, **characterized in that** the aminosulfonic acid component B) is 4-aminotoluene-2-sulfonic acid, 5-aminotoluene-2-sulfonic acid and/or 2-aminonaphthalene-4-sulfonic acid.

5. Process according to Claims 1 and 2, **characterized in that** the aminosulfonic acid component B) comprises amino-functional sulfonic acids of the general formula (II) 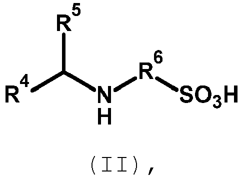 in which R⁴ and R⁵ are each independently identical or different radicals and are hydrogen or saturated or unsaturated, linear or branched, aliphatic or cycloaliphatic or aromatic organic radicals having 1 to 18 carbon atoms, which are substituted or unsubstituted and/or comprise heteroatoms in the chain, wherein R⁴ and R⁵, also in combination with each other and optionally with one further nitrogen atom or one oxygen atom, may form cycloaliphatic or heterocyclic rings having 3 to 8 carbon atoms, which may optionally be further substituted, and R⁶ is a linear or branched aliphatic radical having 2 to 6 carbon atoms.

6. Process according to Claim 5, **characterized in that** the aminosulfonic acid component B) is 2-isopropylaminoethane-1-sulfonic acid, 3-isopropylaminopropane-1-sulfonic acid, 4-isopropylaminobutane-1-sulfonic acid, 2-cyclohexylaminoethane-1-sulfonic acid, 3-cyclohexylaminopropane-1-sulfonic acid and/or 4-cyclohexylaminobutane-1-sulfonic acid.

7. Process according to any of Claims 1 to 6, **characterized in that** the aminosulfonic acid component B) is used in an amount of 0.3 to 25.0% by weight, particularly preferably 0.5 to 15.0% by weight, especially preferably 1.0 to 10.0% by weight, based on the total weight of the components A) and B) .

8. Process according to any of Claims 1 to 7, **characterized in that** the non-ionically hydrophilic or hydrophobic compounds C) are pure polyethylene oxide polyether alcohols and/or mixed polyalkylene oxide polyether alcohols, the alkylene oxide units of which consist of ethylene oxide units to an extent of at least 70 mol%, and/or aliphatic alcohols or fatty acid ester alcohols which comprise in each case at least 8 carbon atoms.

9. Process according to any of Claims 1 to 8, **characterized in that** the tertiary amines D) are N,N-dimethylbutylamine, N,N-dimethyl-2-ethylhexylamine, N,N-diethylmethylamine, N,N-diisopropylethylamine, N,N-diisopropyl-2-ethylhexylamine, N,N-dimethylcyclohexylamine, N,N-dicyclohexylmethylamine, N-methylpyrrolidine, N-methylpiperidine, N-ethylpiperidine, N-methylmorpholine, N-ethylmorpholine, N-isobutylmorpholines or mixtures thereof.

10. Process according to any of Claims 1 to 9, **characterized in that** the auxiliaries and additives E) are antioxidants and/or catalysts.

11. Process according to any of Claims 1 to 10, **characterized in that** the aminosulfonic acids B) have a water content of 0.1 to 1.0% by weight, particularly preferably 0.15 to 0.9% by weight, especially preferably 0.2 to 0.6% by weight.

12. Polyisocyanates containing sulfonate groups, obtainable or obtained by a process according to any of Claims 1 to 11.

13. Use of the polyisocyanates containing sulfonate groups according to Claim 12 as starting component in the production of polyurethane plastics.

14. Coating composition comprising polyisocyanates containing sulfonate groups according to Claim 12.

15. Substrate, coated with a coating composition according to Claim 14 optionally cured by the action of heat.

## Revendications

1. Procédé pour la préparation de polyisocyanates contenant des groupes sulfonate, comprenant une transformation
A) d'au moins un composant de type polyisocyanate avec
B) au moins un acide aminosulfonique qui présente au moins un groupe amino et au moins un groupe acide sulfonique, et éventuellement
C) au moins un composé organique non ionique hydrophile ou hydrophobe, qui présente au moins un groupe réactif envers des isocyanates, en présence
D) d'au moins une amine tertiaire et éventuellement en présence
E) d'autres auxiliaires et additifs
**caractérisé en ce que**
l'acide aminosulfonique B) présente une teneur en eau de 0,05 à 1,5 % en poids.

2. Procédé selon la revendication 1, **caractérisé en ce qu'**en ce qui concerne le composant de type polyisocyanate A), il s'agit de polyisocyanates dotés d'une structure de type uretdione, isocyanurate, allophanate, biuret, iminooxadiazinedione et/ou oxadiazinetrione dotée de groupes isocyanates liés exclusivement de manière aliphatique et/ou cycloaliphatique.

3. Procédé selon la revendication 1 ou 2, **caractérisé en ce qu'**en ce qui concerne l'acide aminosulfonique B), il s'agit d'acides sulfoniques aromatiques substitués qui peuvent porter jusqu'à trois groupes acide sulfonique et qui présentent jusqu'à trois groupes amino primaire ou secondaire, les positions au niveau du cycle aromatique en position ortho par rapport au groupe amino étant non substituées.

4. Procédé selon la revendication 3, **caractérisé en ce que** le composant de type acide aminosulfonique B) est l'acide 4-aminotoluène-2-sulfonique, l'acide 5-aminotoluène-2-sulfonique et/ou l'acide 2-aminonaphtalène-4-sulfonique.

5. Procédé selon les revendications 1 et 2, **caractérisé en ce qu'**en ce qui concerne le composant de type acide aminosulfonique B), il s'agit d'acides sulfoniques fonctionnalisés par amino de formule générale (II) 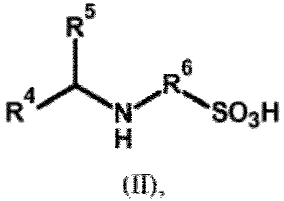 dans laquelle R⁴ et R⁵ représentent indépendamment l'un de l'autre des radicaux identiques ou différents et sont hydrogène ou des radicaux organiques saturés ou insaturés, linéaires ou ramifiés, aliphatiques ou cycloaliphatiques ou aromatiques comportant 1 à 18 atomes de carbone, qui sont substitués ou non substitués et/ou présentent des hétéroatomes dans la chaîne, R⁴ et R⁵ pouvant également former en combinaison l'un avec l'autre et éventuellement avec un atome d'azote supplémentaire ou un atome d'oxygène des cycles cycloaliphatiques ou hétérocycliques comportant 3 à 8 atomes de carbone qui peuvent éventuellement être de plus substitués, et R⁶ représentant un radical aliphatique linéaire ou ramifié comportant 2 à 6 atomes de carbone.

6. Procédé selon la revendication 5, **caractérisé en ce que** le composant de type acide aminosulfonique B) est l'acide 2-isopropylaminoéthane-1-sulfonique, l'acide 3-isopropylaminopropane-1-sulfonique, l'acide 4-isopropylaminobutane-1-sulfonique, l'acide 2-cyclohexylaminoéthane-1-sulfonique, l'acide 3-cyclohexylaminopropane-1-sulfonique et/ou l'acide 4-cyclohexylaminobutane-1-sulfonique.

7. Procédé selon l'une quelconque des revendications 1 à 6, **caractérisé en ce que** le composant de type acide aminosulfonique B) est utilisé en une quantité de 0,3 à 25,0 % en poids, particulièrement préférablement de 0,5 à 15,0 % en poids, tout particulièrement préférablement de 1,0 à 10,0 % en poids, par rapport au poids total des composants A) et B).

8. Procédé selon l'une quelconque des revendications 1 à 7, **caractérisé en ce que** les composés C) non ioniques hydrophiles ou hydrophobes sont des poly(oxyde d'éthylène)polyétheralcools purs et/ou des poly(oxyde d'alkylène)polyétheralcools mélangés dont les motifs oxyde d'alkylène sont constitués d'au moins 70 % en moles de motifs oxyde d'éthylène, et/ou des alcools aliphatiques ou des alcools d'esters d'acide gras, qui présentent à chaque fois au moins 8 atomes de carbone.

9. Procédé selon l'une quelconque des revendications 1 à 8, **caractérisé en ce que** les amines tertiaires D) sont la N,N-diméthylbutylamine, la N,N-diméthyl-2-éthylhexylamine, la N,N-diéthylméthylamine, la N,N-diisopropyléthylamine, N,N-diisopropyl-2-éthylhexylamine, la N,N-diméthylcyclohexylamine, la N,N-dicyclohexylméthylamine, la N-méthylpyrrolidine, la N-méthylpipéridine, la N-éthylpipéridine, la N-méthylmorpholine, la N-éthylmorpholine, la N-isobutylmorpholine ou leurs mélanges.

10. Procédé selon l'une quelconque des revendications 1 à 9, **caractérisé en ce que** les auxiliaires et additifs E) sont des antioxydants et/ou des catalyseurs.

11. Procédé selon l'une quelconque des revendications 1 à 10, **caractérisé en ce que** les acides aminosulfoniques B) présentent une teneur en eau de 0,1 à 1,0 % en poids, particulièrement préférablement 0,15 à 0,9 % en poids, tout particulièrement préférablement de 0,2 à 0,6 % en poids.

12. Polyisocyanates contenant des groupes sulfonate obtenus ou qui peuvent être obtenus par un procédé selon l'une quelconque des revendications 1 à 11.

13. Utilisation des polyisocyanates contenant des groupes sulfonate selon la revendication 12 en tant que composant de départ lors de la préparation de plastiques de polyuréthane.

14. Agent de revêtement contenant des polyisocyanates contenant des groupes sulfonate selon la revendication 12.

15. Substrat, revêtu avec un agent de revêtement selon la revendication 14 éventuellement durci sous l'action de la chaleur.
